(19) Europäisches Patentamt
European Patent Office
Office européen des brevets

(11) **EP 1 695 554 B1**

(12) **FASCICULE DE BREVET EUROPEEN**

(45) Date de publication et mention
de la délivrance du brevet:
**31.12.2014 Bulletin 2015/01**

(21) Numéro de dépôt: **04787329.4**

(22) Date de dépôt: **08.09.2004**

(51) Int Cl.:
*H04N 21/8547* (2011.01)      *H04N 21/43* (2011.01)

(86) Numéro de dépôt international:
**PCT/FR2004/002276**

(87) Numéro de publication internationale:
**WO 2005/029860 (31.03.2005 Gazette 2005/13)**

(54) **PROCEDE ET MODULE DE RECEPTION DE SIGNAUX DE TELEVISION**

VERFAHREN UND EMPFANGSMODUL VON FERNSEHSIGNALEN

TELEVISION SIGNAL RECEPTION METHOD AND MODULE

(84) Etats contractants désignés:
**AT BE BG CH CY CZ DE DK EE ES FI FR GB GR
HU IE IT LI LU MC NL PL PT RO SE SI SK TR**

(30) Priorité: **16.09.2003 FR 0310847**

(43) Date de publication de la demande:
**30.08.2006 Bulletin 2006/35**

(73) Titulaire: **Orange**
**75015 Paris (FR)**

(72) Inventeur: **BERTIN, Christian**
**F-35000 Rennes (FR)**

(74) Mandataire: **Joly, Jean-Jacques et al
Cabinet Beau de Loménie
158, rue de l'Université
75340 Paris cedex 07 (FR)**

(56) Documents cités:
**WO-A-00/20976      WO-A-02/060181
WO-A-02/071760      US-B1- 6 324 694**

• **ISO/IEC: "ISO/IEC 13818-1. INFORMATION
TECHNOLOGY - GENERIC CODING OF MOVING
PICTURES AND ASSOCIATED AUDIO
INFORMATION: SYSTEMS. // TECHNOLOGIES
DE L'INFORMATION - CODAGE GÉNÉRIQUE DES
IMAGES ANIMÉES ET DU SON ASSOCIÉ:
SYSTÈMES - Recommendation ITU-T H.222.0
(2000E)", INTERNATIONAL STANDARD ISO/IEC,,
vol. 13818-1, 1 December 2000 (2000-12-01) ,
pages I-XVII,1, XP002601409,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 1 695 554 B1**

## Description

L'invention concerne un procédé de réception de signaux de télévision.

Un domaine de l'invention concerne les téléviseurs ou appareils de réception de signaux de télévision et plus généralement l'audiovisuel sur les canaux de télévision.

Classiquement, les signaux de télévision véhiculent à la fois l'image et le son du contenu audiovisuel devant être restitué à l'utilisateur sur son téléviseur.

On souhaite de plus en plus élargir l'offre de contenus audiovisuels. Ainsi, des données que pourra interroger l'utilisateur sur son téléviseur peuvent également être ajoutées à l'image et au son.

Toutefois, les informations diffusées doivent s'accommoder de la largeur de bande nécessairement limitée des canaux de télévision, ce qui restreint leur volume.

Le document US 6 324 694 décrit un procédé de restitution de données subsidiaires correspondant à des données primaires de contenu reçues d'une source externe, ces données subsidiaires étant indépendantes des données primaires et restituées de façon synchrone avec les données primaires.

Le document "ISO/IEC 13818-1: Information Technology - Generic Coding of Moving Pictures and Associated Audio Information: Systems, Receemmendation ITU-T H220.0 (2000E)", International Standard ISO/IEX, vol. 13818-1, 1er décembre 2000, pages I-XVII, 1, traite de la combinaison d'un ou de plusieurs flux vidéo et audio élémentaires, ainsi que d'autres données, en un unique ou en de multiples flux adaptés pour le stockage ou la transmission.

Le document propose un procédé et un système pour synchroniser plusieurs signaux transmis via différents moyens, comme par exemple un signal video transmis via la télévision et un signal audio secondaire transmis via le réseau Internet.

L'invention vise à obtenir un procédé de réception de signaux de télévision sur un terminal de réception multimédia, qui pallie les inconvénients de l'état de la technique et qui permette d'étendre les possibilités de fourniture de contenus à l'utilisateur.

A cet effet, un premier objet de l'invention est un procédé de réception, sur un terminal de réception multimédia, de signaux de télévision diffusés, conforme à la revendication 1, et dans lequel

- on reçoit sur le terminal de réception multimédia au moins une composante principale des signaux de télévision diffusés via un premier réseau de diffusion,

caractérisé en ce que

- on insère au préalable dans la composante principale des repères temporels principaux d'avancement de restitution de contenu rapportés à un instant de référence prédéterminé,
- on acquiert sur le terminal de réception multimédia par un deuxième réseau distant d'ordinateurs, comportant au moins une source d'émission de composantes secondaires, au moins une composante secondaire, qui doit être associée à la composante principale pour restituer à l'utilisateur un contenu audiovisuel cohérent formé des composantes principale et secondaire,
  des repères temporels secondaires d'avancement de restitution de contenu rapportés audit instant de référence prédéterminé étant insérés dans la composante secondaire avant restitution, et
- on restitue sur le terminal de réception multimédia la composante principale reçue et la composante secondaire acquise en respectant la chronologie des repères temporels secondaires d'avancement de restitution de contenu et des repères temporels principaux d'avancement de restitution de contenu, pour restituer à l'utilisateur un contenu audiovisuel cohérent formé des composantes principale et secondaire.

Grâce à l'invention, la composante secondaire habituellement véhiculée par les signaux de télévision contenant la composante principale peut être remplacée par une composante secondaire issue du deuxième réseau, autre que le réseau de diffusion des signaux de télévision. Par conséquent, l'invention permet d'échapper aux limitations imposées par les signaux de télévision en ce qui concerne la composante secondaire de ceux-ci. On tire ainsi profit de l'offre potentielle du deuxième réseau en composantes secondaires, beaucoup plus importante que celle du réseau de diffusion des signaux de télévision, ainsi que de sa facilité d'accès.

Ainsi, si la composante secondaire est par exemple le son et/ou les sous-titres correspondants, ceux-ci pourront être restitués sur le terminal de réception multimédia dans une langue autre que celle imposée par les signaux de télévision, à condition que le son et/ou les sous-titres correspondants dans cette langue soient disponibles dans la composante secondaire transmise au terminal de réception multimédia par le deuxième réseau. L'invention ouvre ainsi la voie à une diffusion simultanée par signaux de télévision d'un même contenu dans plusieurs pays de langues différentes, par exemple en Europe, avec possibilité dans chaque pays d'obtenir le son et/ou les sous-titres correspondants dans la langue de ce pays.

La synchronisation des composantes principale et secondaire permet de restituer sur le terminal de réception multimédia des informations liées instantanément à la composante principale et non seulement des informations instantanément indépendantes de la composante principale comme les données de programme de télévision de la signalisation DVB.

Suivant d'autres caractéristiques de l'invention,

- les repères temporels principaux d'avancement de restitution de contenu ont chacun une valeur principale du temps écoulé depuis ledit instant prédéterminé de référence,
les repères temporels secondaires d'avancement de restitution de contenu ont chacun une valeur secondaire du temps écoulé depuis ledit instant prédéterminé de référence,
on détecte le passage d'un repère temporel principal d'avancement de restitution de contenu dans la composante principale reçue, on recherche dans la composante secondaire acquise un repère temporel secondaire d'avancement de restitution de contenu ayant une valeur secondaire supérieure ou égale à la valeur principale du repère temporel principal détecté d'avancement de restitution de contenu, et on fait démarrer la restitution de la composante secondaire acquise à partir du repère temporel secondaire d'avancement de restitution de contenu obtenu par ladite recherche ;

- ledit instant de référence prédéterminé est un instant prédéterminé de début de restitution de contenu de la composante principale ;

- la composante principale comporte, en plus desdits repères temporels principaux d'avancement de restitution de contenu rapportés audit instant de référence prédéterminé, des deuxièmes repères temporels principaux, non rapportés audit instant de référence prédéterminé et associés respectivement auxdits repères temporels principaux d'avancement de restitution de contenu rapportés audit instant de référence prédéterminé,
on modifie dans la composante secondaire les repères temporels secondaires d'avancement de restitution de contenu pour leur donner la même référence temporelle que les deuxièmes repères temporels principaux de la composante principale, en ajoutant aux repères temporels secondaires d'avancement de restitution de contenu le décalage temporel existant entre les repères temporels principaux d'avancement de restitution de contenu rapportés audit instant de référence prédéterminé et les deuxièmes repères temporels principaux, non rapportés audit instant de référence prédéterminé et associés respectivement auxdits repères temporels principaux d'avancement de restitution de contenu, et
ladite restitution de la composante principale reçue et de la composante secondaire acquise sur le terminal de réception multimédia est effectuée sur la base de la chronologie des repères temporels secondaires modifiés d'avancement de restitution de contenu de la composante secondaire et des deuxièmes repères temporels principaux de la composante principale reçue, non rapportés audit instant de référence prédéterminé,

- les repères temporels secondaires d'avancement de restitution de contenu sont présents à l'origine dans la composante secondaire acquise du deuxième réseau sur le terminal de réception multimédia ;

- ou les repères temporels secondaires d'avancement de restitution de contenu sont insérés dans la composante secondaire sur le terminal de réception multimédia, après acquisition sur le terminal de réception multimédia depuis le deuxième réseau ;

- l'étape d'acquisition de la composante secondaire comprend la mémorisation, dans au moins une mémoire tampon du terminal de réception multimédia, de la composante secondaire reçue du deuxième réseau, et l'étape de restitution sur le terminal de réception multimédia de la composante principale reçue et de la composante secondaire acquise comprend l'extraction de la mémoire tampon de la composante secondaire mémorisée ;

- la composante secondaire est acquise par interrogation d'une adresse de la source de composantes secondaires, qui se trouve dans des données de description présentes avec la composante principale dans les signaux de télévision reçus, puis téléchargement depuis la source de composantes secondaires vers le terminal de réception multimédia ;

- ou la composante secondaire est acquise par interrogation d'une adresse de la source de composantes secondaires, qui se trouve dans des données de description présentes dans des métadonnées diffusées indépendamment et reçues préalablement par le terminal T ou consultées préalablement par le terminal T à une adresse connue, puis téléchargement depuis la source de composantes secondaires vers le terminal de réception multimédia ;

- les données de description comportent pour chaque identifiant d'une composante secondaire, le type de la composante secondaire parmi au moins audio, sous-titre ou vidéo, la langue de la composante secondaire et l'adresse respective où obtenir la composante secondaire sur le deuxième réseau ;

- ou la composante secondaire est acquise à l'aide d'un moteur de recherche manuelle sur le deuxième réseau, puis téléchargement depuis le deuxième réseau sur le terminal de réception multimédia ;

- ou la composante secondaire est acquise par envoi au terminal de réception multimédia sur le deuxième réseau en multidiffusion par la source de composantes secondaires, et enregistrement dans la mémoire tampon ;

- ou la composante secondaire est acquise par téléchargement dans la mémoire tampon et lecture en transit de celle-ci ;

- les repères temporels principaux d'avancement de restitution de contenu comprennent au moins un repère principal d'interruption de contenu voulu et un repère principal de reprise de contenu voulu consécutif au repère principal d'interruption de contenu voulu, entre lesquels se trouve un contenu indésirable dans la composante principale et lesquels sont synchronisés dans la composante secondaire respectivement avec un premier repère secondaire de contenu voulu et un deuxième repère secondaire de contenu voulu, qui est consécutif au repère secondaire de contenu voulu, la composante secondaire située entre le premier repère secondaire de contenu voulu et le deuxième repère secondaire de contenu voulu correspondant à un contenu désirable autre que le contenu indésirable de la composante principale.

Un deuxième objet de l'invention est un module de réception de signaux de télévision diffusés, pour la mise en oeuvre du procédé de réception tel que décrit ci-dessus, le module de réception comprenant des moyens de réception sur un terminal de réception multimédia d'au moins une composante principale des signaux de télévision diffusés via un premier réseau extérieur de diffusion et des moyens de restitution d'un contenu audiovisuel à l'utilisateur à partir de la composante principale reçue,

caractérisé en ce que le module de réception comporte en outre :

- des moyens d'acquisition par le deuxième réseau distant d'ordinateurs, de ladite composante secondaire, qui doit être associée à la composante principale pour restituer à l'utilisateur un contenu audiovisuel cohérent formé des composantes principale et secondaire,
- des moyens de commande automatique des moyens de restitution pour que soit restituée par ceux-ci la composante principale reçue et la composante secondaire acquise et que soit respectée lors de cette restitution la chronologie des repères temporels secondaires d'avancement de restitution de contenu et des repères temporels principaux d'avancement de restitution de contenu.

L'invention sera mieux comprise à la lecture de la description qui va suivre, donnée uniquement à titre d'exemple non limitatif en référence aux dessins annexés, sur lesquels :

- la figure 1 représente schématiquement un exemple de la structure temporelle des composantes principale et secondaire selon l'invention,
- la figure 2 représente schématiquement un premier mode d'acquisition de la composante secondaire selon l'invention,
- la figure 3 représente schématiquement un deuxième mode d'acquisition de la composante secondaire selon l'invention,
- la figure 4 représente schématiquement un premier exemple de la structure temporelle des composantes principale et secondaire en cas d'insertion d'un contenu indésirable,
- la figure 5 représente schématiquement un deuxième exemple de la structure temporelle des composantes principale et secondaire en cas d'insertion d'un contenu indésirable, et
- la figure 6 représente schématiquement un autre exemple de la structure temporelle des composantes principale et secondaire selon l'invention.

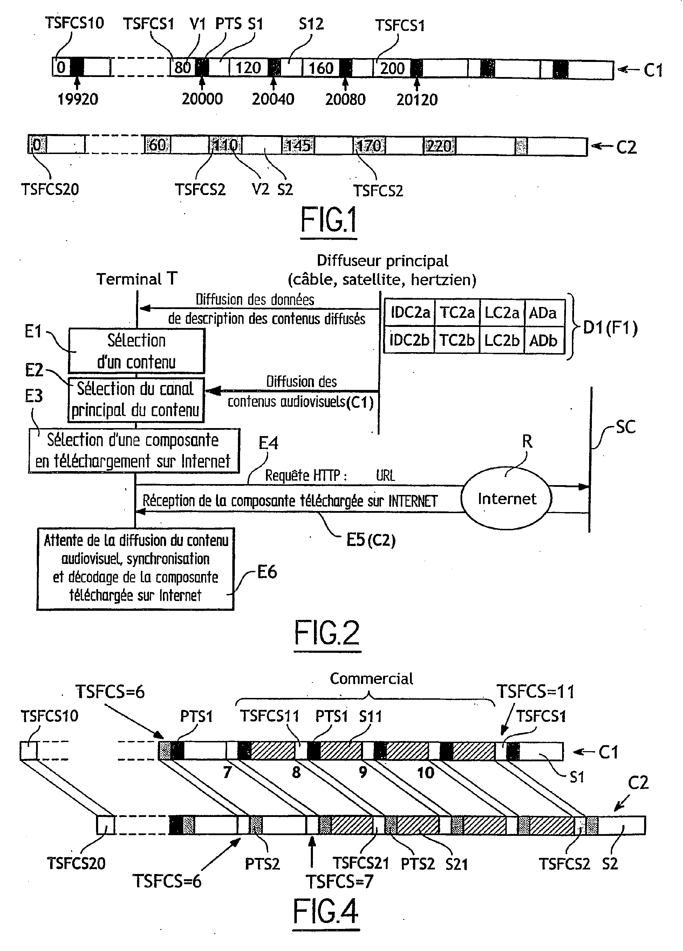

Le procédé suivant l'invention est mis en oeuvre automatiquement sur un récepteur ou terminal T de réception multimédia, qui est apte à recevoir des signaux de télévision diffusés par une première source, telle que d'un diffuseur principal à la figure 1, via un premier réseau, comme par exemple par voie hertzienne, par satellite, par câble ou par le réseau Internet et qui est apte à en restituer le contenu audiovisuel à l'utilisateur par des moyens appropriés, tels que sur un écran et un ou plusieurs haut-parleurs. Le terminal T est par exemple un téléviseur recevant les signaux de télévision par voie hertzienne, par satellite ou par câble ou un ordinateur ou un autre terminal, recevant les signaux de télévision par le réseau Internet. Les signaux de télévision reçus sur le terminal T comprennent une composante principale C1 pour restituer sur celui-ci un contenu.

Dans la composante principale C1 véhiculée par les signaux de télévision sont présents des repères temporels (ou estampilles temporelles) principaux TSFCS1 d'avancement de restitution de contenu, ainsi que représenté à la figure 1. Ces repères principaux TSFCS1 sont insérés à la diffusion par le premier réseau pour être présents dans la composante principale C1 reçue sur le terminal. Ces repères principaux TSFCS1 sont insérés dans la composante C1 à la diffusion en direct, ou sont prévus à l'origine sur un support d'enregistrement de la composante C1, lorsque celle-ci est diffusée en différé par lecture de ce support d'enregistrement. Ces repères principaux TSFCS1 contiennent chacun une valeur temporelle principale V1 égale au temps écoulé (par exemple en millisecondes aux figures) depuis un repère principal TSFCS10 de début de contenu de la composante principale C1, situé par exemple en un instant de référence au début d'un programme de télévision tel qu'un film ou une émission télévisée ou autres. Ce repère principal TSFCS10 de début de contenu est remis à zéro au début de chaque contenu. Entre les repères principaux TSFCS1 consécutifs se trouvent des échantillons S1 associés de composante principale C1 qui représentent les parties de la composante C1 devant être restituées sur le terminal T, comme par exemple une image complète de C1. Les repères TSFCS1 sont des repères temporels qui indiquent le moment de restitution (présentation) de l'échantillon S1 qui suit immédiatement au décodeur principal adéquat(audio, vidéo, sous-titre, etc) de la composante principale C1.

Dans le mode de réalisation de la figure 2, les signaux de télévision diffusés contiennent en outre des données de description du ou des contenu(s) diffusés et, parmi celles-ci, une ou plusieurs adresse(s) d'une ou de plusieurs composante(s) secondaire(s) C2 présente(s) sur une source distante SC et des identificateurs correspondants de ces composantes secondaires C2. Cette source SC distante de composantes secondaires est accessible par le terminal via un deuxième réseau informatique R tel que le réseau Internet.

L'utilisateur a la possibilité de sélectionner par tout moyen approprié sur le terminal T, au cours de l'étape E2, le canal principal de télévision, c'est-à-dire la chaîne de télévision, et par là même la composante principale C1, qui sera restituée sur le terminal T. Cette étape E2 est éventuellement précédée d'une étape E1 de sélection de contenu parmi plusieurs contenus identifiés dans les données de description et diffusées sur les différents canaux de télévision.

Aux figures, on suppose à titre d'exemple que la composante secondaire C2 code le son. La composante secondaire pourrait également coder, en plus ou à la place du son, des sous-titres transcrivant le son.

L'utilisateur a également la possibilité de sélectionner par tout moyen approprié sur le terminal T, au cours de l'étape suivante E3, une composante secondaire C2 par son identificateur présent dans les données de description associées à la composante principale C1 sélectionnée. Par exemple, la composante C1 est l'image et le son en français d'un film F1. Les identifiants de composantes secondaires C2 désignés dans les données D1(F1) de description associées à cette composante C1 du film F1 sont par exemple IDC2a pour le son du film F1 en anglais, IDC2b pour le son du film F1 en allemand. Les données de description comportent par exemple pour chaque identifiant d'une composante secondaire C2, le type TC2a, TC2b de la composante secondaire C2 (audio, sous-titre ou vidéo), qui est audio pour IDC2a et IDC2b, la langue LC2a, LC2b de la composante secondaire C2, qui est respectivement anglais et allemand pour IDC2a et IDC2b, et l'adresse respective ADa, ADb où obtenir la composante secondaire C2 sur le deuxième réseau R.

La sélection d'une composante secondaire C2 sur le terminal déclenche automatiquement l'envoi au cours de l'étape suivante E4, via un modem présent sur le terminal T, d'une requête en cette composante secondaire sélectionnée C2 sur le deuxième réseau R, que l'on suppose être dans l'exemple précédent d'identifiant IDC2a et donc à l'adresse ADa. Cette requête est par exemple du type http, FTP ou autres, envers le site Web de la source SC. En réponse à cette requête lui parvenant, la source SC, par exemple formée par un serveur, renvoie la composante secondaire C2 correspondant à l'adresse ADa présente dans la requête. La composante secondaire C2 est alors téléchargée via le modem sur le terminal ou récepteur T au cours de l'étape E5. Puis la composante principale C1 des signaux de télévision et la composante secondaire C2 téléchargée sont restituées sur le terminal T au cours de l'étape E6. Lors de cette restitution, la composante secondaire C2 téléchargée est décodée et remplace le cas échéant la composante homologue présente dans le canal principal, c'est-à-dire que dans l'exemple précédent le son en anglais sélectionné comme composante secondaire C2 remplace le son en français présent dans le canal principal.

Des repères temporels TSFCS2 secondaires d'avancement de restitution de contenu sont insérés dans la composante secondaire C2 avant restitution. A la figure 1, les repères secondaires TSFCS2 sont espacés par exemple de manière quelconque par rapport aux repères principaux TSFCS1. Ces repères secondaires TSFCS1 contiennent chacun une valeur temporelle secondaire V2 égale au temps écoulé (par exemple en millisecondes) depuis un repère secondaire TSFCS20 de début de contenu de la composante secondaire C2 coïncidant avec le repère principal TSFCS10 de début de contenu de la composante principale C1. Par conséquent, les repères temporels secondaires TSFCS2 ont la même référence temporelle TSFCS20 = TSFCS10 que les repères temporels principaux TSFCS1. Ce repère secondaire TSFCS20 de début de contenu est remis à zéro au début de chaque contenu. Entre les repères secondaires TSFCS2 consécutifs se trouvent des échantillons S2 de la composante secondaire C2, qui représentent les parties de la composante C2 devant être restituées sur le terminal T, comme par exemple du son pour C2. Les repères TSFCS2 sont des repères temporels qui indiquent le moment de restitution (présentation) de l'échantillon S2 qui suit immédiatement au décodeur secondaire adéquat de la composante secondaire C2.

Les échantillons S1 et S2 sont prédéterminés dans la composante C1 diffusée et dans la composante C2 présente sur le deuxième réseau R, pour former ensemble un contenu audiovisuel cohérent pour l'utilisateur, lorsqu'ils sont restitués simultanément sur le terminal T, ce contenu étant formé dans l'exemple précédent par une image et un son en anglais synchronisés, y compris en ce qui concerne les paroles et le mouvement des lèvres des locuteurs.

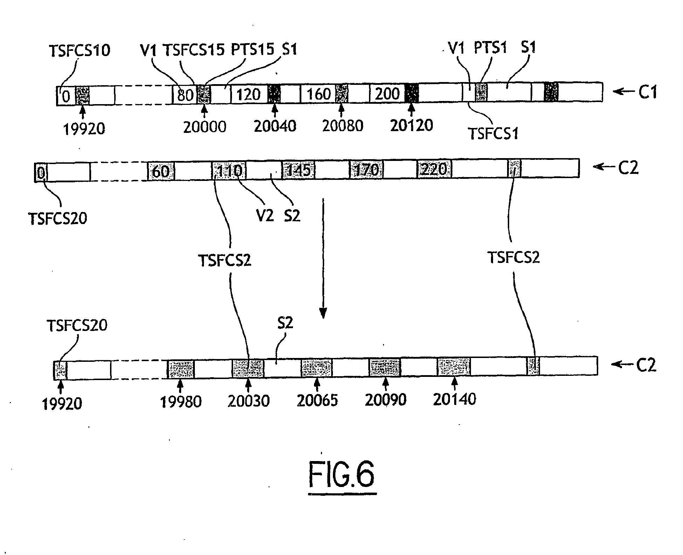

Les repères temporels TSFCS1 et TSFCS2 sont prévus éventuellement en plus de repères temporels PTS (estampilles temporelles de présentation ou en anglais Presentation Time Stamp pour PTS), qui sont connues dans les composantes C1 et C2, dans le cas de flux MPEG-2 TS mais qui pas remises systématiquement à zéro à chaque changement de contenu et qui peuvent en plus être sujettes à des changements de référence et à des retards dans le cas d'un remultiplexage de canaux de télévision dans le réseau de diffusion des signaux de télévision. Ces repères temporels PTS sont indiqués en plus foncé que les repères TSFCS1 aux figures 1, 4, 5 et 6, avec leur valeur temporelle en millisecondes 19920, 20000, 20040, 20080, 20120 indiquée en dessous par une flèche aux figures 1 et 6. Ainsi pour deux repères TSFCS1 et TSFCS2 ayant la même référence, les estampilles PTS ne sont pas garanties comme ayant la même référence, ce qui fait qu'une synchronisation n'utilisant que les estampilles PTS ne fonctionnerait pas correctement et donnerait lieu à des décalages temporels incontrôlables entre C1 et C2, perceptibles par l'utilisateur.

Ces repères temporels secondaires TSFCS2 sont insérés dans la composante secondaire C2 à l'origine dans la source SC avant acquisition depuis le deuxième réseau R, ou à la réception sur le terminal T après acquisition depuis le deuxième réseau.

Le cas échéant, le terminal T comporte une ou plusieurs mémoire(s) tampon pour mémoriser la composante secondaire C2 reçue du deuxième réseau R et l'en extraire lors de sa restitution.

Lors de la restitution des composantes C1 et C2 sur le terminal T, une synchronisation automatique est effectuée des repères temporels TSFCS2 secondaires par rapport aux repères temporels TSFCS1 principaux correspondants, par des moyens appropriés sur le terminal T, ainsi que cela est décrit ci-dessous dans un premier mode de réalisation.

Lorsqu'un échantillon S1 de la composante principale C1 est remis au décodeur principal pour restitution, le repère principal TSFCS1 associé à cet échantillon principal S1 indique par sa valeur V1 au décodeur principal le temps écoulé depuis l'instant de référence TSFCS10 de cette composante principale C1. Si le décodeur principal a commencé son décodage avant l'instant de référence TSFCS10, ce temps écoulé correspond au début du décodage du contenu courant associé à cet instant de référence TSFCS10.

On détecte, par un détecteur principal présent sur le terminal T, le dernier repère temporel TSFCS1 principal courant d'avancement de restitution de contenu, survenu dans la composante principale C1 reçue, et on extrait du repère TSFCS1 principal détecté la valeur temporelle principale V1 de celui-ci.

Puis, on recherche automatiquement par des moyens de sélection appropriés, dans la composante secondaire C2 acquise, le repère secondaire TSFCS2 ayant la valeur secondaire V2, supérieure ou égale à, et par exemple identique ou immédiatement supérieure à la valeur principale V1 détectée, transmise aux moyens de sélection, et on extrait du repère TSFCS2 secondaire ainsi trouvé la valeur temporelle secondaire V2 de celui-ci.

Ensuite, grâce par exemple à une horloge locale du terminal T, sur laquelle sont réglés le décodeur principal et le décodeur secondaire, on fait démarrer par le décodeur secondaire la restitution de la composante secondaire C2 acquise, à l'échantillon secondaire S2 correspondant au repère temporel secondaire TSFCS2 trouvé et ce à l'instant de restitution correspondant à la valeur temporelle secondaire V2 de celui-ci. Les repères principaux TSFCS1 et secondaires TSFCS2 sont contrôlés en continu pour que les échantillons S1 et S2 associés soient décodés au bon moment par rapport au même repère TSFCS10 de début.

Cet exemple de réalisation est illustré à titre d'exemple à la figure 1, où les valeurs numériques indiquées dans C1 et C2 sont celles de V1 et V2 pour des repères TSFCS1 et TSFCS2, en millisecondes. Si le décodeur principal détecte dans S1 le repère TSFCS1 ayant V1 = 80 ms, il recherchera dans C2 le repère secondaire TSFCS2 ayant la plus petite valeur V2 supérieure ou égale à 80 ms. Dans ce cas, le repère secondaire TSFCS2 ayant V2 = 110 ms sera trouvé dans C2. On attendra la durée calculée DC = V2 - V1 - DT = 110 ms - 80 ms - 2 ms = 28 ms à partir de l'instant V1 + DT pour déclencher sur le décodeur secondaire la restitution de l'échantillon S2 suivant TSFCS2, qui s'effectuera donc à l'instant V2, où DT = 2 ms est la durée de traitement écoulée depuis la remise de l'échantillon S1 au décodeur principal, laquelle dépend des moyens utilisés. Cette restitution de S2 sur T correspond à la figure 1 à la fin de l'échantillon S1 ayant V1 = 80 ms et au début de l'échantillon S12 ayant V1 = 120 ms et suivant S1.

Le cas échéant, la restitution sur le terminal T des composantes C1 et C2 lors de l'étape E6 attend automatiquement le début de la réception sur le terminal T des signaux de télévision comportant la composante principale C1 sélectionnée associée à la composante secondaire C2 téléchargée (c'est-à-dire la détection du repère principal de début TSFCS10), laquelle composante secondaire C2 est stockée entre-temps dans la mémoire tampon.

Le terminal T peut avoir manqué les premiers échantillons S1 et S2, c'est-à-dire les premiers suivant TSFCS10 et TSFCS20. Dans ce cas, cela ne l'empêche pas de resynchroniser les composantes C1 et C2 au décodage, puisque le décodage est effectué sous le contrôle de l'horloge locale, qui est interne au terminal T et qui se cale sur les repères temporels TSFCS1 de la composante principale. Si la composante secondaire C2 a été téléchargée après le début de la composante principale C1 sélectionnée, la restitution de C1 et C2 est effectuée à partir du repère principal actuel TSFCS1 détecté de la composante principale C1.

Dans une variante, les données de description contenant l'adresse de la source SC de composantes secondaires sont présentes dans des métadonnées diffusées indépendamment et reçues préalablement par le terminal T ou consultées préalablement par le terminal T à une adresse connue.

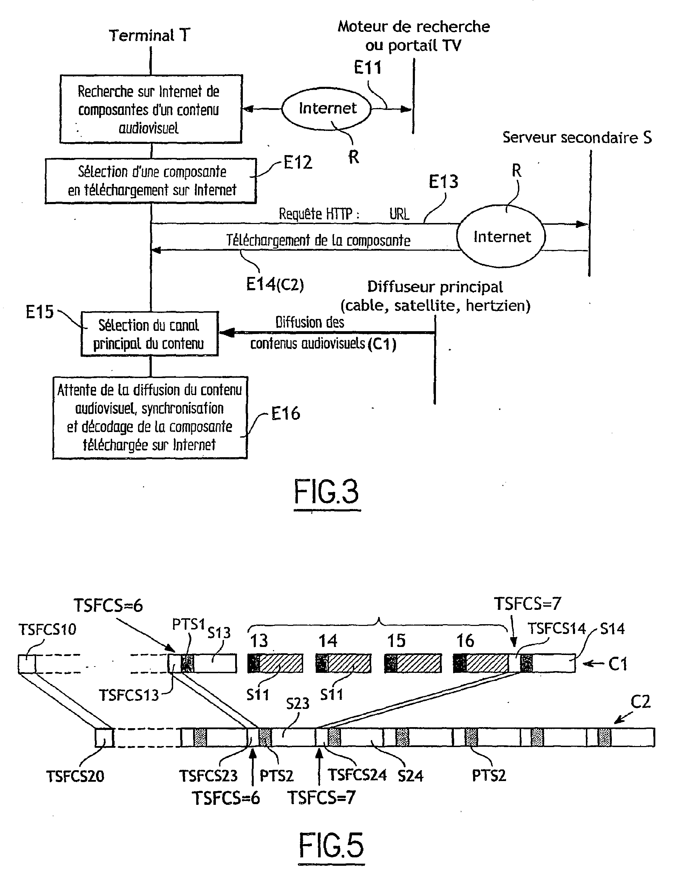

A la figure 3, en variante à la figure 2, aucune donnée de description n'est transmise au terminal T ou reçue par celui-ci, ou les données de description ne contiennent pas d'indications de composantes secondaires C2 disponibles sur le réseau R, ou les composantes C2 disponibles dans ces données de description ne conviennent pas à l'utilisateur. Dans ce cas, il est offert à l'utilisateur de rechercher manuellement sur le deuxième réseau R la composante secondaire C2 voulue à l'étape E11, en utilisant un moteur de recherche présent sur son terminal T ou un portail de télévision. Lorsqu'il a trouvé et sélectionné la composante secondaire C2 voulue au cours de l'étape E12, l'utilisateur commande l'émission d'une requête en acquisition de celle-ci à l'étape E13 analogue à l'étape E4 de la figure 2 et son téléchargement sur le terminal T s'ensuit à l'étape E14 de manière analogue à l'étape E5 de la figure 2.

Puis le canal principal de télévision est sélectionné à l'étape E15 de manière analogue à l'étape E2 de la figure 2. Au cours de l'étape suivante E16, la composante principale C1 sélectionnée est reçue sur le terminal T, et la composante principale C1 des signaux de télévision et la composante secondaire C2 téléchargée sont restituées sur le terminal T de manière analogue à l'étape E6 de la figure 2.

En variante aux figures 2 et 3, on déclenche l'acquisition de toutes les composantes secondaires C2 pouvant être associées à la composante principale C1 sélectionnée, en accédant à toutes les composantes secondaires C2 déclarées dans les données de description, et/ou en recherchant sur le deuxième réseau R toutes les composantes secondaires C2 liées à une composante principale particulière.

En variante à la figure 2, lors de sa restitution, la composante secondaire C2 est lue en transit dans la mémoire tampon, c'est-à-dire en continu (en anglais : « streaming ») sur le terminal T en même temps que des parties de la composante C2, futures par rapport à celle lue, sont enregistrées dans la mémoire tampon. Dans ce cas, la requête à la source SC est du type RTSP avec l'adresse URL de la composante secondaire C2 désirée et le repère temporel secondaire actuel TSFCS2 à laquelle la restitution est arrivée sur le terminal T. Dans ce cas, la source SC est apte à émettre la composante secondaire C2 à partir d'un instant quelconque (repère temporel secondaire) indiqué dans la requête pour permettre au terminal T de se mettre en réception d'un contenu à n'importe quel moment. La source SC est apte à repositionner temporellement la composante secondaire qu'elle émet, à la demande du terminal T, si le délai de transit du réseau R est trop grand pour permettre le décodage synchronisé sans risque d'interruption. En cas d'avance de la composante secondaire C2 reçue sur le terminal T, les échantillons S2 en avance seront stockés dans la mémoire tampon pour attendre les échantillons S1 correspondants de la composante principale C1, et en cas de retard de la composante secondaire C2 reçue sur le terminal T, le terminal commandera par une requête auprès de la source SC un saut en avant dans la lecture en transit des échantillons S2, pour rattraper les échantillons S1 correspondants de la composante principale C1.

Dans une autre variante, la composante secondaire C2 est acquise par envoi au terminal par la source SC sur le deuxième réseau R en multidiffusion (en anglais : « multicast »). Dans ce cas, la requête à la source SC est du type IGMP. La diffusion de la composante secondaire C2 par la source SC sur le réseau R sera effectuée à un instant déterminé en avance du début de la composante principale C1. La composante secondaire C2 reçue sera par conséquent stockée dans la mémoire tampon et attendra les échantillons S1 correspondants de la composante principale C1 pour être restituée en synchronisme avec celle-ci.

Dans un deuxième mode de réalisation représenté à la figure 6, qui est une variante du premier mode de réalisation représenté à la figure 1, la composante principale C1 comporte en plus des deuxièmes repères temporels principaux PTS1 précités (estampilles temporelles de présentation PTS), qui ne sont pas rapportés à l'instant de référence TSFCS10 auquel sont rapportés les repères temporels TSFCS1 principaux d'avancement de restitution 0de contenu. Ces deuxièmes repères temporels principaux PTS1 sont également associés à chaque échantillon principal S1 et sont par exemple prévus après chaque repère temporel TSFCS1 principal.

Ainsi qu'on le voit aux figures 4 et 5, de la même manière, des deuxièmes repères temporels secondaires PTS2 précités (estampilles temporelles de présentation PTS), qui ne sont pas rapportés à l'instant de référence TSFCS20 auquel sont rapportés les repères temporels secondaires TSFCS2 d'avancement de restitution de contenu, sont associés aux repères temporels secondaires TSFCS2, par exemple après chacun de ceux-ci. Ces deuxièmes repères temporels secondaires PTS2 ont une référence temporelle quelconque par rapport aux repères PTS1 et ont généralement une référence temporelle différente de celle des repères PTS1.

A la figure 6, on modifie dans la composante secondaire C2 les repères temporels TSFCS2 secondaires d'avancement de restitution de contenu pour leur donner la même référence temporelle que les deuxièmes repères temporels principaux PTS1.

Pour ce faire, on ajoute à la valeur V2 des repères temporels secondaires TSFCS2 d'avancement de restitution de contenu de C2 la valeur temporelle respective des deuxièmes repères temporels principaux PTS1 et on lui retranche la valeur temporelle respective V1 des repères temporels TSFCS1 principaux d'avancement de restitution de contenu associés à ces deuxièmes repères temporels principaux PTS1 dans la composante principale C1 selon la formule :

$$\text{TSFCS2 modifiés} = \text{TSFCS2} + \text{PTS1} - \text{TSFCS1}.$$

Etant donne que les deuxièmes repères temporels principaux PTS1 consécutifs ont le même espacement temporel entre eux que les repères temporels TSFCS1 principaux d'avancement de restitution de contenu consécutifs entre eux, associés respectivement à ces deuxièmes repères temporels principaux PTS1, le calcul des repères temporels secondaires TSFCS2 d'avancement de restitution de contenu modifiés peut utiliser l'un quelconque des repères temporels TSFCS1 principaux d'avancement de restitution de contenu et le deuxième repère temporel principal PTS1 associé à celui-ci.

Dans l'exemple numérique de la figure 6, pour le repère principal d'avancement de restitution de contenu TSFCS15 = 80 ms, associé dans C1 au deuxième repère PTS15 = 20000 ms, les repères temporels secondaires TSFCS2 d'avancement de restitution de contenu seront modifiés selon la formule

$$\text{TSFCS2 modifiés} = \text{TSFCS2} + \text{PTS15} - \text{TSFCS15} = \text{TSFCS2} + 20000 \text{ ms} - 80 \text{ ms}.$$

Ainsi que représenté par la flèche descendant de la figure 6, le repère TSFCS2 = 110 ms suivant ce TSFCS1 détecté deviendra TSFCS2 modifié = 110 ms + 20000 ms - 80 ms = 20030 ms,.
le repère TSFCS2 = 145 ms deviendra TSFCS2 modifié = 145 ms + 20000 ms - 80 ms = 20065 ms, et ainsi de suite.

Les repères temporels secondaires TSFCS2 d'avancement de restitution de contenu de C2 sont modifiés avant remise au décodeur secondaire. Pour effectuer le calcul des repères secondaires TSFCS2 modifiés, on détecte, par le détecteur principal, avec le dernier repère temporel TSFCS1 principal courant d'avancement de restitution de contenu, survenu dans la composante principale C1 reçue, le deuxième repère PTS1 associé à TSFCS1 et on extrait du repère TSFCS1 principal détecté la valeur temporelle principale V1 de celui-ci et du deuxième repère PTS1 sa valeur.

La restitution des composantes principale C1 et secondaire C2 est ensuite effectuée sur la base de ces repères temporels TSFCS2 secondaires modifiés d'avancement de restitution de contenu et des deuxièmes repères temporels PTS1, au lieu de l'être comme précédemment sur la base des repères TSFCS1 et TSFCS2.

Dans C2, les repères temporels TSFCS2 secondaires modifiés d'avancement de restitution de contenu conservent la même référence temporelle, mais reculée de PTS15 - TSFCS15 = 19920 ms par rapport au repère principal TSFCS10 de début de contenu de la composante principale C1, que les deuxièmes repères PTS1 de C1.

Ci-dessous est traité du cas où le contenu est volontairement interrompu, à la diffusion dans les signaux de télévision, par un contenu indésirable ne faisant pas partie à proprement parler du contenu souhaité et ne pouvant pas être choisi à l'avance par l'utilisateur lorsqu'il sélectionne le contenu souhaité, ce contenu indésirable étant par exemple de la publicité.

Une première possibilité, représentée à la figure 4, où l'accolade et les hachures désignent le contenu indésirable, est de tenir compte de ce contenu indésirable dans la composante principale C1 et dans la composante secondaire, en prévoyant dans la composante principale C1, des repères principaux TSFCS11 de contenu indésirable rapportés à TSFCS10 (ainsi qu'indiqué à titre d'exemple par TSFCS = 6 et TSFCS = 11), des échantillons principaux S11 associés de contenu indésirable, des repères principaux TSFCS1 de contenu voulu rapportés à TSFCS10 (ainsi qu'indiqué à titre d'exemple par TSFCS = 7, 8, 9, 10) et des échantillons principaux S1 associés de contenu voulu, prenant la suite des TSFCS11 et S11, et
en prévoyant dans la composante secondaire C2, des repères secondaires TSFCS21 de contenu indésirable rapportés à TSFCS20, des échantillons secondaires S21 associés de contenu indésirable, des repères secondaires TSFCS2 de contenu voulu rapportés à TSFCS20 et des échantillons principaux S2 associés de contenu voulu, prenant la suite des TSFCS21 et S21.

Dans cette première possibilité, le contenu indésirable est restitué à l'utilisateur dans son intégralité avec la composante secondaire C2.

Dans une deuxième possibilité, représentée à la figure 5, où l'accolade et les hachures désignent le contenu indésirable, il n'existe pas de repères principaux TSFCS11 de contenu indésirable, ni de repères secondaires TSFCS21 de contenu indésirable, ni d'échantillons secondaires S21 associés de contenu indésirable. Les échantillons principaux S11 de contenu indésirable sont insérés dans la composante principale C1 entre un repère principal TSFCS13 d'interruption de contenu voulu (associé à son échantillon principal voulu S13) et un repère principal TSFCS14 de reprise de contenu voulu (associé à son échantillon principal voulu S14) consécutif au repère principal TSFCS13 d'interruption de contenu voulu, ainsi qu'indiqué à titre d'exemple par TSFCS = 6 et TSFCS = 7. Le repère principal TSFCS13 d'interruption de contenu voulu est synchronisé, dans la composante secondaire S2, avec un repère secondaire TSFCS23 de contenu voulu associé à son échantillon secondaire S23 de contenu voulu, et le repère principal TSFCS14 de reprise de contenu voulu est synchronisé, dans la composante secondaire S2, avec un repère secondaire TSFCS24 de contenu voulu, qui est associé à son échantillon secondaire S24 de contenu voulu et qui est consécutif au repère secondaire TSFCS23 de contenu voulu.

Par conséquent, dans la deuxième possibilité, la composante secondaire du contenu indésirable ne sera pas restituée à l'utilisateur, mais attendra la reprise de la composante principale pour resynchroniser la composante secondaire sur celle-ci en TSFCS24, la durée de restitution de S23 étant celle mise par S13 et les S11. Les échantillons secondaires S24 et suivants seront donc mis en mémoire tampon sur le terminal T pour attendre que la reprise survienne.

Le procédé suivant l'invention est mis en oeuvre sur le terminal par tout moyen approprié, par exemple à l'aide d'un module de réception surajouté de manière visible pour l'utilisateur au terminal lui-même et ayant la forme d'un boîtier pouvant être raccordé par l'utilisateur au terminal, ou à l'aide d'un module de réception incorporé au terminal et invisible de l'extérieur. Ce terminal ou module de réception est réalisé à l'aide de tous moyens électroniques et informatiques programmés de manière appropriée pour la mise en oeuvre du procédé de réception. Ainsi, lorsque le programme informatique installé sur le module de réception est exécuté par celui-ci, le fonctionnement habituel de celui-ci consistant à restituer les signaux de télévision est modifié par le fait que la composante principale C1 et la composante secondaire C2 sont synchronisées précisément pour leur restitution, ce qui est particulièrement intéressant lorsque la composante secondaire C2 a un contenu lié à la composante principale C1, par exemple lorsque la composante principale C2 est un son de paroles dans une autre langue que celle du son accompagnant la composante principale C1 dans les signaux de télévision.

Des données de description d'un contenu audiovisuel, selon les spécifications du forum appelé TV Anytime (voir le site Internet www.tv-anytime.org), ayant spécifié la description de la diffusion de contenus audiovisuels en mono réseau, ont le schéma ci-dessous.

```
<complexType name="BroadcastEventType">
    <complexContent>
        <extension base="tva:ScheduleEvéntType">
            <attribut name="serviceIDRef" type="tva:TVAIDRefType"
        use="optional"/>
            <attributeGroup ref="tva:fragmentIdentification"/>
        </extension>
    </complexContent>
</complexType>


<complexType name="ScheduleEventType">
    <complexContent>
        <extension base="tva:ProgramLocationType">
            <sequence>
                <element name="PublishedStartTime" type="dateTime" minOccurs="0"/>
                <element name="PublishedEndTime" type="dateTime" minOccurs="0"/>
                <element name="PublishedDuration" type="duration" minOccurs="0"/>
                <element name="Live" type="tva:FlagType" minOccurs="0"/>
                <element name="Repeat" type="tva:FlagType" minOccurs="0"/>
                    <element name="FirstShowing" type="tva:FlagType" minOccurs="0"/>
                <element name="LastShowing" type="tva:FlagType" minOccurs="0"/>
                <element name="Free" type="tva:FlagType" minOccurs="0"/>
            </sequénce>
        </extension>
    </complexContent>
</complexType>


<complexType name="ProgramLocationType" abstract="true">
    <sequence>
        <element name="Program" type="tva:CRIDRefType"/>
        <element name="ProgramURL" type="anyURI" minOccurs="0"/>
        <element name="InstanceMetadataId" type="tva:InstanceMetadataIdType" minOccurs="0"/>
        <element name="InstanceDescription" type="tva:InstanceDescriptionType" minOccurs="0"/>
    </sequence>
</complexType>
```

Un exemple de données TV Anytime de description de la diffusion d'un contenu audiovisuel est reproduit ci-dessous.

```
<BroadcastEvent serviceIDref = "hbc100022311">
    <Program crid="crid://hbc.com/foxes/episode11"/>
    <ProgramURL>dvb://1.4ee2.3f5/</ProgramURL>
    <PublishedStartTime>2001-04-07T19:00:00.00+01:00</PublishedStartTime>
    <PublishedDuration>PT6H</PublishedDuration>
    <Live value="false="false"/>
    <Repeat value="true"/>
    <FirstShowing value="false"/>
    <LastShowing value="false"/>
    <Free value="false"/>
</BroadcastEvent>
```

L'élément <Program crid="crid://hbc.com/foxes/episode11"/> permet d'identifier le contenu audiovisuel.

L'élément<ProgramURL>dvb://1.4ee2.3f5/</ ProgramURL> permet d'identifier le canal de diffusion.

L'élément  <PublishedStartTime>2001-04-07T19:00:00.00+01:00</PublishedStartTime>  permet  d'indiquer l'heure de diffusion.

Suivant l'invention, la définition de l'élément <ProgramURL> est étendue pour permettre la désignation de plusieurs composantes qui sont disponibles séparément. Sont ajoutés :

-    le type de la composante secondaire : par exemple audio, sous-titre, vidéo (par exemple TC2a, TC2b dans ce qui précède à la figure 1),

-    la langue de la composante secondaire : par exemple français, anglais, etc (par exemple LC2a, LC2b dans ce qui précède à la figure 1),

-    l'adresse où acquérir la composante secondaire, pouvant être une adresse multicast, URL http, ou URL FTP, un canal DVB, etc, (ADa, ADb dans ce qui précède à la figure 1).

Suivant l'invention, le schéma modifié des données de description TV Anytime est par exemple celui représenté ci-dessous, où les éléments ajoutés ou modifiés par l'invention sont ceux soulignés.

```
<complexType name="ProgramLocationType" abstract="true">
    <sequence>
        <element name="Program" type="tva:CRIDRefType"/>
        <element name="ProgramURL" type="ProgramURLType" minOccurs="0"
            maxOccurs="unbounded"/>
        <element name="InstanceMetadataId" type="tva:InstanceMetadataIdType" minOccurs="0"/>
        <element namé="InstanceDescription" type="tva:InstanceDescriptionType" minOccurs="0"/>
    </sequence>
</complexType>

<complexType name="ProgramURLType">
    <complexContent>
        <extension base="anyURI">
            <attribute name="type" type="ComponentType" use="optional"/>
            <attribute name="language" type="mpeg7:ExtendedLanguageType" use="optional"/>
        </extension>
    </complexContent>
</complexType>

<simpleType name="ComponentType">
    <restriction base="string">
        <enumeration value="Audio"/>
        <enumeration value="Video"/>
```

(suite)

```
            <enumeration value="ClosedCaptions"/>
        </restriction>
    </simpleType>
```

Par exemple, ces données de description sont celles ci-dessous, dans le cas d'une composante principale formée de la vidéo, de l'audio en français et des sous-titres en anglais, et d'une composante secondaire formée de l'audio en anglais, acquis en multidiffusion par le réseau Internet, et les sous-titres en allemand, acquis par téléchargement par le réseau Internet.

```
<BroadcastEvent serviceIDRef = "hbc100022311">
    <Program crid="crid://hbc.com/foxes/episode11"/>
    <ProgramURL>dvb://1.4ee2.3f5/</ProgramURL>
    <ProgramURL type="Audio" language="en">
        igmp://234.2.2.2,audio:49170 RTP AVP 0/</ProgramURL>
    <ProgramURL type="Audio" language="de">
        http://www.channelFrance.com/titanic/de_audio.wav</ProgramURL>
    <ProgramURL type="ClosedCaptions" language="de">
        http://www.channelFrance.com/titanic/de/closedCaptions.ist</ProgramU
RL>
    <PublishedStartTime>2001-04-
07T19:00:00.00+01:00</PublishedStartTime>
    <PublishedDuration>PT6H</PublishedDuration>
    <Live value="false"/>
    <Repeat value="true"/>
    <FirstShowing value="false"/>
    <LastShowing value="false"/>
    <Free value="false"/>
</BroadcastEvent>
```

## Revendications

1. Procédé de réception, sur un terminal de réception multimédia (T), de signaux de télévision diffusés, dans lequel

   - on reçoit (E6) sur le terminal de réception multimédia (T) au moins une composante (C1) principale des signaux de télévision diffusés via une première source,
   **caractérisé en ce que** :
   - on insère au préalable dans la composante principale (C1) des repères temporels (TSFCS1) principaux d'avancement de restitution de contenu rapportés à un instant de référence (TSFCS10) prédéterminé,
   - on acquiert (E5) sur le terminal de réception multimédia (T) par une deuxième source (SC) d'émission de composantes secondaires, au moins une composante secondaire (C2), qui doit être associée à la composante principale (C1) pour restituer à l'utilisateur un contenu audiovisuel cohérent formé des composantes principale (C1) et secondaire (C2),
   des repères temporels (TSFCS2) secondaires d'avancement de restitution de contenu rapportés audit instant de référence (TSFCS10) prédéterminé étant insérés dans la composante secondaire (C2) avant restitution,
   - on restitue (E6) sur le terminal de réception multimédia (T) la composante principale reçue (C1) et la composante secondaire acquise (C2) en respectant la chronologie des repères temporels (TSFCS2) secondaires d'avancement de restitution de contenu et des repères temporels (TSFCS1) principaux d'avancement de restitution de contenu, pour restituer à l'utilisateur un contenu audiovisuel cohérent formé des composantes principale (C1) et secondaire (C2), la composante secondaire (C2) remplaçant le cas échéant la composante homologue présente dans la composante principale (C1) lors de la restitution ;
   et **en ce que** :
   - les repères temporels (TSFCS1) principaux d'avancement de restitution de contenu ont chacun une valeur (V1) principale du temps écoulé depuis un repère principal de début de contenu de la composante principale situé audit instant prédéterminé de référence (TSFCS10), ledit repère principal de début de contenu étant mis à zéro au début de chaque contenu ;
- les repères temporels (TSFCS2) secondaires d'avancement de restitution de contenu ont chacun une valeur (V2) secondaire du temps écoulé depuis ledit instant prédéterminé de référence (TSFCS10),
- les repères temporels principaux (TSFCS1) d'avancement de restitution de contenu et les repères temporels secondaires (TSFCS2) d'avancement de restitution de contenu sont insérés en plus d'estampilles temporelles de présentation dites PTS contenues dans les composantes principale et secondaire et non rapportées à l'instant prédéterminé de référence,
- on détecte le passage d'un repère temporel (TSFCS1) principal d'avancement de restitution de contenu dans la composante principale (C1) reçue, on recherche dans la composante secondaire (C2) acquise un repère temporel secondaire (TSFCS2) d'avancement de restitution de contenu ayant une valeur secondaire (V2) immédiatement supérieure à la valeur principale (V1) du repère temporel (TSFCS1) principal détecté d'avancement de restitution de contenu, et on fait démarrer la restitution de la composante secondaire (C2) acquise à partir du repère temporel secondaire (TSFCS2) d'avancement de restitution de contenu obtenu par ladite recherche, les repères temporels secondaires (TSFCS2) d'avancement de restitution de contenu étant espacés de manière quelconque par rapport aux repères temporels (TSFCS1) principaux d'avancement de restitution de contenu.

2. Procédé de réception suivant la revendication 1 **caractérisé en ce que** ledit instant de référence (TSFCS10) prédéterminé est un instant prédéterminé de début de restitution de contenu de la composante principale (C1).

3. Procédé de réception suivant l'une quelconque des revendications précédentes, **caractérisé en ce que** la composante principale (C1) comporte, en plus desdits repères temporels (TSFCS1) principaux d'avancement de restitution de contenu rapportés audit instant de référence (TSFCS10) prédéterminé, des deuxièmes repères temporels principaux (PTS1) correspondant auxdites estampilles de présentation PTS contenues dans la composante principale, non rapportés audit instant de référence (TSFCS10) prédéterminé et associés respectivement auxdits repères temporels (TSFCS1) principaux d'avancement de restitution de contenu rapportés audit instant de référence (TSFCS10) prédéterminé,
on modifie dans la composante secondaire (C2) les repères temporels (TSFCS2) secondaires d'avancement de restitution de contenu pour leur donner la même référence temporelle que les deuxièmes repères temporels principaux (PTS1) de la composante principale (C1), en ajoutant aux repères temporels (TSFCS2) secondaires d'avancement de restitution de contenu le décalage temporel existant entre les repères temporels (TSFCS1) principaux d'avancement de restitution de contenu rapportés audit instant de référence (TSFCS10) prédéterminé et les deuxièmes repères temporels principaux (PTS1), non rapportés audit instant de référence (TSFCS10) prédéterminé et associés respectivement auxdits repères temporels (TSFCS1) principaux d'avancement de restitution de contenu, et ladite restitution (E6) de la composante principale reçue (C1) et de la composante secondaire acquise (C2) sur le terminal de réception multimédia (T) est effectuée sur la base de la chronologie des repères temporels (TSFCS2) secondaires modifiés d'avancement de restitution de contenu de la composante secondaire (C2) et des deuxièmes repères temporels (PTS1) principaux de la composante principale reçue (C1), non rapportés audit instant de référence (TSFCS10) prédéterminé.

4. Procédé de réception suivant l'une quelconque des revendications 1 à 3, **caractérisé en ce que** les repères temporels (TSFCS2) secondaires d'avancement de restitution de contenu sont présents à l'origine dans la composante secondaire (C2) acquise de la deuxième source (SC) sur le terminal de réception multimédia (T).

5. Procédé de réception suivant l'une quelconque des revendications 1 à 3, **caractérisé en ce que** les repères temporels (TSFCS2) secondaires d'avancement de restitution de contenu sont insérés dans la composante secondaire (C2) sur le terminal de réception multimédia (T), après acquisition sur le terminal de réception multimédia (T) depuis la deuxième source (SC).

6. Procédé de réception suivant l'une quelconque des revendications précédentes, **caractérisé en ce que** l'étape d'acquisition de la composante secondaire (C2) comprend la mémorisation, dans au moins une mémoire tampon du terminal de réception multimédia (T), de la composante secondaire (C2) reçue de la deuxième source (SC), et l'étape de restitution sur le terminal de réception multimédia (T) de la composante principale reçue (C1) et de la composante secondaire acquise (C2) comprend l'extraction de la mémoire tampon de la composante secondaire (C2) mémorisée.

7. Procédé de réception suivant la revendication 6, **caractérisé en ce que** la composante secondaire (C2) est acquise par interrogation (E4) d'une adresse (ADa, ADb) de la source (SC) de composantes secondaires, qui se trouve dans des données de description présentes avec la composante principale (C1) dans les signaux de télévision reçus, puis téléchargement (E5) depuis la source (SC) de composantes secondaires vers le terminal de réception multimédia (T).

8.  Procédé de réception suivant la revendication 6, **caractérisé en ce que** la composante secondaire (C2) est acquise par interrogation (E4) d'une adresse (ADa, ADb) de la source (SC) de composantes secondaires, qui se trouve dans des données de description présentes dans des métadonnées diffusées indépendamment et reçues préalablement par le terminal (T) ou consultées préalablement par le terminal (T) à une adresse connue, puis téléchargement (E5) depuis la source (SC) de composantes secondaires vers le terminal de réception multimédia (T).

9.  Procédé de réception suivant la revendication 7 ou 8, **caractérisé en ce que** les données de description comportent pour chaque identifiant d'une composante secondaire (C2), le type (TC2a, TC2b) de la composante secondaire (C2) parmi au moins audio, sous-titre ou vidéo, la langue (LC2a, LC2b) de la composante secondaire (C2) et l'adresse respective (ADa, ADb) où obtenir la composante secondaire (C2) sur la deuxième source (SC).

10. Procédé de réception suivant la revendication 6, **caractérisé en ce que** la composante secondaire (C2) est acquise à l'aide d'un moteur de recherche manuelle (E11) sur la deuxième source (SC), puis téléchargement (E14) depuis la deuxième source (SC) sur le terminal de réception multimédia (T).

11. Procédé de réception suivant la revendication 6, **caractérisé en ce que** la composante secondaire (C2) est acquise par envoi au terminal de réception multimédia (T) sur la deuxième source (SC) en multidiffusion par la source (SC) de composantes secondaires, et enregistrement dans la mémoire tampon.

12. Procédé de réception suivant la revendication 6, **caractérisé en ce que** la composante secondaire (C2) est acquise par téléchargement dans la mémoire tampon et lecture en transit de celle-ci.

13. Procédé de réception suivant l'une quelconque des revendications précédentes, **caractérisé en ce que** les repères temporels (TSFCS1) principaux d'avancement de restitution de contenu comprennent au moins un repère principal (TSFCS13) d'interruption de contenu voulu et un repère principal (TSFCS14) de reprise de contenu voulu consécutif au repère principal (TSFCS13) d'interruption de contenu voulu, entre lesquels se trouve un contenu indésirable dans la composante principale (C1) et lesquels sont synchronisés dans la composante secondaire (C2) respectivement avec un premier repère secondaire (TSFCS23) de contenu voulu et un deuxième repère secondaire (TSFCS24) de contenu voulu, qui est consécutif au repère secondaire (TSFCS23) de contenu voulu, la composante secondaire (C2) située entre le premier repère secondaire (TSFCS23) de contenu voulu et le deuxième repère secondaire (TSFCS24) de contenu voulu correspondant à un contenu désirable autre que le contenu indésirable de la composante principale (C1).

14. Programme d'ordinateur, comportant des instructions pour la mise en oeuvre des étapes au moins des étapes de réception, d'acquisition et de restitution du procédé de réception suivant l'une quelconque des revendications précédentes, lorsqu'il est mis en oeuvre sur un terminal ou module de réception de signaux de télévision diffusés.

15. Récepteur de signaux de télévision diffusés, le récepteur comprenant des moyens de réception sur un terminal de réception multimédia (T) d'au moins une composante (C1) principale de signaux de télévision diffusés via une première source et des moyens de restitution d'un contenu audiovisuel à l'utilisateur à partir de la composante principale (C1) reçue,
    **caractérisé en ce que** le module de réception comporte en outre:

    - des moyens d'acquisition par une deuxième source (SC), d'une composante secondaire (C2), qui doit être associée à la composante principale (C1) pour restituer à l'utilisateur un contenu audiovisuel cohérent formé des composantes principale (C1) et secondaire (C2),
    - des moyens de commande automatique des moyens de restitution pour que soient restituées par ceux-ci la composante principale reçue (C1) et la composante secondaire acquise (C2), la composante secondaire acquise (C2) remplaçant le cas échéant la composante homologue présente dans la composante principale (C1), et que soit respectée lors de cette restitution la chronologie de repères temporels (TSFCS2) secondaires d'avancement de restitution de contenu rapportés à un instant de référence (TSFCS10) prédéterminé et chacun ayant une valeur (V2) secondaire du temps écoulé depuis ledit instant de référence (TSFCS10), et de repères temporels (TSFCS1) principaux d'avancement de restitution de contenu rapportés audit instant de référence (TSFCS10) prédéterminé et chacun ayant une valeur (V1) principale du temps écoulé depuis un repère principal de début de contenu de la composante principale situé audit instant de référence (TSFCS10), ledit repère principal de début de contenu étant mis à zéro au début de chaque contenu, lesdits repères temporels principaux (TSFCS1) d'avancement de restitution de contenu et les repères temporels secondaires (TSFCS2) d'avancement de restitution de contenu étant insérés en plus d'estampilles temporelles de présentation dites PTS contenues dans les composantes principale et secondaire et non rapportées à l'instant prédéterminé de référence (TSFCS10) ;

- des moyens pour détecter le passage d'un repère temporel (TSFCS1) principal d'avancement de restitution de contenu dans la composante principale reçue (C1), rechercher dans la composante secondaire acquise (C2) un repère temporel (TSFCS2) secondaire d'avancement de restitution de contenu ayant une valeur secondaire (V2) immédiatement supérieure à la valeur principale (V1) du repère temporel principal détecté d'avancement de restitution de contenu, et faire démarrer la restitution de la composante secondaire acquise (C2) à partir du repère temporel secondaire d'avancement de restitution de contenu obtenu par ladite recherche, les repères temporels (TSFCS2) secondaires d'avancement de restitution de contenu étant espacés de manière quelconque par rapport aux repères temporels (TSFCS1) principaux d'avancement de restitution de contenu.

**16.** Système de diffusion de signaux de télévision, comprenant :

- une première source de diffusion d'au moins une composante (C1) principale des signaux de télévision à destination d'au moins un terminal de réception multimédia (T),

**caractérisé en ce qu'**il comporte en outre :

- des moyens d'insertion dans la composante principale (C1) de repères temporels (TSFCS1) principaux d'avancement de restitution de contenu rapportés à un instant de référence (TSFCS10) prédéterminé et ayant chacun une valeur (V1) principale du temps écoulé depuis un repère principal de début de contenu de la composante principale situé audit instant de référence prédéterminé (TSFCS10), ledit repère principal de début de contenu étant mis à zéro au début de chaque contenu ;

- une deuxième source (SC) d'émission d'au moins une composante secondaire (C2), dans laquelle sont insérés, avant restitution, des repères temporels (TSFCS2) secondaires d'avancement de restitution de contenu rapportés audit instant de référence (TSFCS10) prédéterminé et ayant chacun une valeur (V2) secondaire du temps écoulé depuis ledit instant de référence prédéterminé, ces repères temporels (TSFCS2) secondaires d'avancement de restitution de contenu étant espacés de manière quelconque par rapport aux repères temporels (TSFCS1) principaux d'avancement de restitution de contenu, ladite composante secondaire étant destinée à être acquise sur un terminal de réception multimédia (T) et à être associée à la composante principale (C1) pour restituer à l'utilisateur un contenu audiovisuel cohérent formé des composantes principale (C1) et secondaire (C2),

les repères temporels principaux (TSFCS1) d'avancement de restitution de contenu et les repères temporels secondaires (TSFCS2) d'avancement de restitution de contenu étant insérés en plus d'estampilles temporelles de présentation dites PTS contenues dans les composantes principale et secondaire et non rapportées à l'instant prédéterminé de référence,

la composante principale (C1) et la composante secondaire (C2) étant restituées sur le terminal de réception multimédia (T) en respectant la chronologie des repères temporels (TSFCS2) secondaires d'avancement de restitution de contenu et des repères temporels (TSFCS1) principaux d'avancement de restitution de contenu, ladite chronologie consistant à détecter le passage d'un repère temporel (TSFCS1) principal d'avancement de restitution de contenu dans la composante principale (C1), rechercher dans la composante secondaire (C2) un repère temporel (TSFCS2) secondaire d'avancement de restitution de contenu ayant une valeur secondaire (V2) immédiatement supérieure à la valeur principale (V1) du repère temporel principal détecté d'avancement de restitution de contenu, et faire démarrer la restitution de la composante secondaire (C2) à partir du repère temporel secondaire d'avancement de restitution de contenu obtenu par ladite recherche ;

la composante secondaire (C2) remplaçant le cas échéant lors de la restitution la composante homologue présente dans la composante principale (C1).

**17.** Système de diffusion de signaux de télévision selon la revendication 16 comprenant en outre des moyens pour insérer dans la composante secondaire (C2) lesdits repères temporels (TSFCS2) secondaires d'avancement de restitution de contenu.

**Patentansprüche**

**1.** Verfahren zum Empfang von ausgesandten Fernsehsignalen an einem Multimedia-Empfangsterminal (T), bei dem

- an dem Multimedia-Empfangsterminal (T) mindestens eine Hauptkomponente (C1) der über eine erste Quelle ausgesandten Fernsehsignale empfangen wird (E6),

**dadurch gekennzeichnet, dass**:

- vorher in die Hauptkomponente (C1) Hauptzeitmarken (TSFCS1) zum Fortschritt der Inhaltswiedergabe eingesetzt werden, die zu einem vorbestimmten Referenzzeitpunkt (TSFCS10) angezeigt werden,

- an dem Multimedia-Empfangsterminal (T) von einer zweiten Sendequelle (SC) Nebenkomponenten erfasst werden (E5), mindestens eine Nebenkomponente (C2), die mit der Hauptkomponente (C1) verbunden werden muss, um dem Benutzer einen kohärenten audiovisuellen Inhalt wiederzugeben, der von den Haupt- (C1) und Nebenkomponenten (C2) gebildet ist,

wobei Nebenzeitmarken (TSFCS2) zum Fortschritt der Inhaltswiedergabe, die zum vorbestimmten Referenzzeitpunkt (TSFCS10) angezeigt werden, in die Nebenkomponente (C2) vor der Wiedergabe eingesetzt werden,

- an dem Multimedia-Empfangsterminal (T) die empfangene Hauptkomponente (C1) und die erfasste Nebenkomponente (C2) wiedergegeben werden (E6), wobei die Chronologie der Nebenzeitmarken (TSFCS2) zum Fortschritt der Inhaltswiedergabe und der Hauptzeitmarken (TSFCS1) zum Fortschritt der Inhaltswiedergabe eingehalten wird, um dem Benutzer einen kohärenten audiovisuellen Inhalt wiederzugeben, der von der Hauptkomponente (C1) und der Nebenkomponente (C2) gebildet ist, wobei die Nebenkomponente (C2) gegebenenfalls die homologe Komponente, die in der Hauptkomponente (C1) vorhanden ist, bei der Wiedergabe ersetzt; und dadurch ,dass:

- die Hauptzeitmarken (TSFCS1) zum Fortschritt der Inhaltswiedergabe jeweils einen Hauptwert (V1) der Zeit haben, die seit einer Hauptmarke zum Inhaltsbeginn der Hauptkomponente, die sich am vorbestimmten Referenzzeitpunkt (TSFCS10) befindet, vergangen ist, wobei die Hauptmarke zum Inhaltsbeginn am Anfang jedes Inhalts auf Null gesetzt wird;

- die Nebenzeitmarken (TSFCS2) zum Fortschritt der Inhaltswiedergabe jeweils einen Nebenwert (V2) der seit dem vorbestimmten Referenzzeitpunkt (TSFCS10) vergangenen Zeit haben,

- die Hauptzeitmarken (TSFCS1) zum Fortschritt der Inhaltswiedergabe und die Nebenzeitmarken (TSFCS2) zum Fortschritt der Inhaltswiedergabe zusätzlich zu Darstellungszeitstempeln, PTS genannt, die in den Haupt- und Nebenkomponenten enthalten sind und zum vorbestimmten Referenzzeitpunkt nicht angezeigt werden, eingesetzt werden,

- der Durchgang einer Hauptzeitmarke (TSFCS1) zum Fortschritt der Inhaltswiedergabe in der empfangenen Hauptkomponente (C1) erfasst wird, in der erfassten Nebenkomponente (C2) eine Nebenzeitmarke (TSFCS2) zum Fortschritt der Inhaltswiedergabe mit einem Nebenwert (V2) gesucht wird, der unmittelbar größer als der Hauptwert (V1) der erfassten Hauptzeitmarke (TSFCS1) zum Fortschritt der Inhaltswiedergabe ist, und die Wiedergabe der erfassten Nebenkomponente (C2) von der Nebenzeitmarke (TSFCS2) zum Fortschritt der Inhaltswiedergabe, die durch die Suche erhalten wurde, gestartet wird, wobei die Nebenzeitmarken (TSFCS2) zum Fortschritt der Inhaltswiedergabe beliebig zu den Hauptzeitmarken (TSFCS1) zum Fortschritt der Inhaltswiedergabe beabstandet sind.

2. Empfangsverfahren nach Anspruch 1, **dadurch gekennzeichnet, dass** der vorbestimmte Referenzzeitpunkt (TSFCS10) ein vorbestimmter Zeitpunkt des Beginns der Inhaltswiedergabe der Hauptkomponente (C1) ist.

3. Empfangsverfahren nach einem der vorhergehenden Ansprüche, **dadurch gekennzeichnet, dass** die Hauptkomponente (C1) zusätzlich zu den Hauptzeitmarken (TSFCS1) zum Fortschritt der Inhaltswiedergabe, die zu dem vorbestimmten Referenzzeitpunkt (TSFCS10) angezeigt werden, zweite Hauptzeitmarken (PTS1) umfasst, die den in der Hauptkomponente enthaltenen Darstellungsstempeln PTS entsprechen, die zum vorbestimmten Referenzzeitpunkt (TSFCS10) nicht angezeigt werden und jeweils mit den Hauptzeitmarken (TSFCS1) zum Fortschritt der Inhaltswiedergabe, die zu dem vorbestimmten Referenzzeitpunkt (TSFCS10) angezeigt werden, verbunden sind, in der Nebenkomponente (C2) die Nebenzeitmarken (TSFCS2) zum Fortschritt der Inhaltswiedergabe verändert werden, um ihnen dieselbe Zeitreferenz wie den zweiten Hauptzeitmarken (PTS1) der Hauptkomponente (C1) zu geben, wobei zu den Nebenzeitmarken (TSFCS2) zum Fortschritt der Inhaltswiedergabe der bestehende zeitliche Versatz zwischen den Hauptzeitmarken (TSFCS1) zum Fortschritt der Inhaltswiedergabe, die zu dem vorbestimmten Referenzzeitpunkt (TSFCS10) angezeigt werden, und den zweiten Hauptzeitmarken (PTS1), die zu dem vorbestimmten Referenzzeitpunkt (TSFCS10) nicht angezeigt werden und jeweils mit den Hauptzeitmarken (TSFCS1) zum Fortschritt der Inhaltswiedergabe verbunden sind, hinzugefügt wird, und die Wiedergabe (E6) der empfangenen Hauptkomponente (C1) und der erfassten Nebenkomponente (C2) an dem Multimedia-Empfangsterminal (T) auf Basis der Chronologie der veränderten Nebenzeitmarken (TSFCS2) zum Fortschritt der Inhaltswiedergabe der Nebenkomponente (C2) und der zweiten Hauptzeitmarken (PTS1) der empfangenen Hauptkomponente (C1), die zum vorbestimmten Referenzzeitpunkt (TSFCS10) nicht angezeigt werden, erfolgt.

4. Empfangsverfahren nach einem der Ansprüche 1 bis 3, **dadurch gekennzeichnet, dass** die Nebenzeitmarken (TSFCS2) zum Fortschritt der Inhaltswiedergabe am Anfang in der erfassten Nebenkomponente (C2) der zweiten Quelle (SC) an dem Multimedia-Empfangsterminal (T) vorhanden sind.

5. Empfangsverfahren nach einem der Ansprüche 1 bis 3, **dadurch gekennzeichnet, dass** die Nebenzeitmarken (TSFCS2) zum Fortschritt der Inhaltswiedergabe in die Nebenkomponente (C2) an dem Multimedia-Empfangsterminal (T) nach Erfassung an dem Multimedia-Empfangsterminal (T) von der zweiten Quelle (SC) eingesetzt werden.

6. Empfangsverfahren nach einem der vorhergehenden Ansprüche, **dadurch gekennzeichnet, dass** der Schritt der Erfassung der Nebenkomponente (C2) die Speicherung der von der zweiten Quelle (SC) empfangenen Nebenkomponente (C2) in mindestens einem Pufferspeicher des Multimedia-Empfangsterminals (T) umfasst, und der Schritt der Wiedergabe der empfangenen Hauptkomponente (C1) und der erfassten Nebenkomponente (C2) an dem Multimedia-Empfangsterminal (T) die Entnahme der gespeicherten Nebenkomponente (C2) aus dem Pufferspeicher umfasst.

7. Empfangsverfahren nach Anspruch 6, **dadurch gekennzeichnet, dass** die Nebenkomponente (C2) durch Abfrage (E4) einer Adresse (ADa, ADb) der Quelle (SC) von Nebenkomponenten, die sich in Beschreibungsdaten befindet, die mit der Hauptkomponente (C1) in den empfangenen Fernsehsignalen vorhanden sind, und dann Fernladen (E5) von der Quelle (SC) von Nebenkomponenten zum Multimedia-Empfangsterminal (T) erfasst wird.

8. Empfangsverfahren nach Anspruch 6, **dadurch gekennzeichnet, dass** die Nebenkomponente (C2) durch Abfrage (E4) einer Adresse (ADa, ADb) der Quelle (SC) von Nebenkomponenten, die sich in Beschreibungsdaten befindet, die in Metadaten vorhanden sind, die unabhängig verbreitet und vorher durch das Terminal (T) empfangen oder vorher vom Terminal (T) an einer bekannten Adresse konsultiert werden, und dann Fernladen (E5) von der Quelle (SC) von Nebenkomponenten zum Multimedia-Empfangsterminal (T) erfasst wird.

9. Empfangsverfahren nach Anspruch 7 oder 8, **dadurch gekennzeichnet, dass** die Beschreibungsdaten für jeden Identifikator einer Nebenkomponente (C2) den Typ (TC2a, TC2b) der Nebenkomponente (C2), mindestens unter Audio-, Untertitel- oder Videotyp, die Sprache (LC2a, LC2b) der Nebenkomponente (C2) und die jeweilige Adresse (ADa, ADb), an der die Nebenkomponente (C2) bei der zweiten Quelle (SC) zu erhalten ist, umfassen.

10. Empfangsverfahren nach Anspruch 6, **dadurch gekennzeichnet, dass** die Nebenkomponente (C2) mit Hilfe einer manuellen Suchmaschine (E11) an der zweiten Quelle (SC), dann Fernladen (E14) von der zweiten Quelle (SC) an das Multimedia-Empfangsterminal (T) erfasst wird.

11. Empfangsverfahren nach Anspruch 6, **dadurch gekennzeichnet, dass** die Nebenkomponente (C2) durch Senden an das Multimedia-Empfangsterminal (T) an der zweiten Quelle (SC) im Multicasting-Verfahren durch die Quelle (SC) von Nebenkomponenten und Aufzeichnung in dem Pufferspeicher erfasst wird.

12. Empfangsverfahren nach Anspruch 6, **dadurch gekennzeichnet, dass** die Nebenkomponente (C2) durch Fernladen in den Pufferspeicher und Transit-Ablesen derselben erfasst wird.

13. Empfangsverfahren nach einem der vorhergehenden Ansprüche, **dadurch gekennzeichnet, dass** die Hauptzeitmarken (TSFCS1) zum Fortschritt der Inhaltswiedergabe mindestens eine Hauptmarke (TSFCS13) zur gewollten Inhaltsunterbrechung und eine Hauptmarke (TSFCS14) zur gewollten Inhaltswiederaufnahme nach der Hauptmarke (TSFCS13) zur gewollten Inhaltsunterbrechung umfassen, zwischen denen sich ein ungewollter Inhalt in der Hauptkomponente (C1) befindet, und die in der Nebenkomponente (C2) mit einer ersten Nebenmarke (TSFCS23) eines gewollten Inhalts bzw. einer zweiten Nebenmarke (TSFCS24) eines gewollten Inhalts synchronisiert sind, die auf die Nebenmarke (TSFCS23) eines gewollten Inhalts folgt, wobei die Nebenkomponente (C2), die sich zwischen der ersten Nebenmarke (TSFCS23) eines gewollten Inhalts und der zweiten Nebenmarke (TSFCS24) eines gewollten Inhalts befindet, einem anderen gewollten Inhalt als dem ungewollten Inhalt der Hauptkomponente (C1) entspricht.

14. Computerprogramm, umfassend Befehle für den Einsatz der Schritte, zumindest der Schritte des Empfangs, der Erfassung und der Wiedergabe, des Empfangsverfahrens nach einem der vorhergehenden Ansprüche, wenn es an einem Terminal oder Modul für den Empfang von ausgesandten Fernsehsignalen eingesetzt wird.

15. Empfänger für ausgesandte Fernsehsignale, wobei der Empfänger Mittel für den Empfang mindestens einer Hauptkomponente (C1) von Fernsehsignalen, die über eine erste Quelle ausgesandt werden, an einem Multimedia-Empfangsterminal (T) und Mittel zur Wiedergabe eines audiovisuellen Inhalts für einen Benutzer von der empfangenen Hauptkomponente (C1) aus umfasst,

**dadurch gekennzeichnet, dass** das Empfangsmodul ferner umfasst:

- Mittel zur Erfassung einer Nebenkomponente (C2) durch eine zweite Quelle (SC), die mit der Hauptkomponente (C1) verbunden werden muss, um dem Benutzer einen kohärenten audiovisuellen Inhalt, der von der Haupt- (C1) und Nebenkomponente (C2) gebildet ist, wiederzugeben,

- Mittel zur automatischen Steuerung der Wiedergabemittel, so dass von diesen die empfangene Hauptkomponente (C1) und die erfasste Nebenkomponente (C2) wiedergegeben werden, wobei die erfasste Nebenkomponente (C2) gegebenenfalls die in der Hauptkomponente (C1) vorhandene homologe Komponente ersetzt, und dass bei dieser Wiedergabe die Chronologie von Nebenzeitmarken (TSFCS2) zum Fortschritt der Inhaltswiedergabe, die zu einem vorbestimmten Referenzzeitpunkt (TSFCS10) angezeigt werden und jeweils einen Nebenwert (V2) der seit dem Referenzzeitpunkt (TSFCS10) vergangenen Zeit haben, und von Hauptzeitmarken (TSFCS1) zum Fortschritt der Inhaltswiedergabe, die zum vorbestimmten Referenzzeitpunkt (TSFCS10) angezeigt werden und jeweils einen Hauptwert (V1) der vergangenen Zeit seit einer Hauptmarke des Inhaltsbeginns der Hauptkomponente, die sich an dem Referenzzeitpunkt (TSFCS10) befindet, haben, eingehalten wird, wobei die Hauptmarke des Inhaltsbeginns zu Beginn jedes Inhalts auf Null gesetzt wird, wobei die Hauptzeitmarken (TSFCS1) zum Fortschritt der Inhaltswiedergabe und die Nebenzeitmarken (TSFCS2) zum Fortschritt der Inhaltswiedergabe zusätzlich zu Darstellungszeitstempeln, PTS genannt, die in den Haupt- und Nebenkomponenten enthalten sind und zu dem vorbestimmten Referenzzeitpunkt (TSFCS10) nicht angezeigt werden, eingesetzt werden;

- Mittel, um den Durchgang einer Hauptzeitmarke (TSFCS1) zum Fortschritt der Inhaltswiedergabe in der empfangenen Hauptkomponente (C1) zu erfassen, in der erfassten Nebenkomponente (C2) eine Nebenzeitmarke (TSFCS2) zum Fortschritt der Inhaltswiedergabe mit einem Nebenwert (V2) zu suchen, der unmittelbar größer als der Hauptwert (V1) der erfassten Hauptzeitmarke zum Fortschritt der Inhaltswiedergabe ist, und die Wiedergabe der erfassten Nebenkomponente (C2) von der Nebenzeitmarke zum Fortschritt der Inhaltswiedergabe, die durch die Suche erhalten wurde, zu starten, wobei die Nebenzeitmarken (TSFCS2) zum Fortschritt der Inhaltswiedergabe beliebig zu den Hauptzeitmarken (TSFCS1) zum Fortschritt der Inhaltswiedergabe beabstandet sind.

16. System zur Aussendung von Fernsehsignalen, umfassend:

- eine erste Sendequelle mindestens einer Hauptkomponente (C1) der Fernsehsignale in Richtung mindestens eines Multimedia-Empfangsterminals (T),

**dadurch gekennzeichnet, dass** es ferner umfasst:

- Mittel zum Einsetzen von Hauptzeitmarken (TSFCS1) zum Fortschritt der Inhaltswiedergabe in die Hauptkomponente (C1), die zu einem vorbestimmten Referenzzeitpunkt (TSFCS10) angezeigt werden und jeweils einen Hauptwert (V1) der vergangenen Zeit von einer Hauptmarke des Inhaltsbeginns der Hauptkomponente, die sich an dem vorbestimmten Referenzzeitpunkt (TSFCS10) befindet, haben, wobei die Hauptmarke des Inhaltsbeginns zu Beginn jedes Inhalts auf Null gesetzt wird;

- eine zweite Sendequelle (SC) mindestens einer Nebenkomponente (C2), in die vor der Wiedergabe Nebenzeitmarken (TSFCS2) zum Fortschritt der Inhaltswiedergabe eingesetzt werden, die zum vorbestimmten Referenzzeitpunkt (TSFCS10) angezeigt werden und jeweils einen Nebenwert (V2) der seit dem vorbestimmten Referenzzeitpunkt vergangenen Zeit haben, wobei diese Nebenzeitmarken (TSFCS2) zum Fortschritt der Inhaltswiedergabe beliebig in Bezug auf die Hauptzeitmarken (TSFCS1) zum Fortschritt der Inhaltswiedergabe beabstandet sind, wobei die Nebenkomponente dazu bestimmt ist, an einem Multimedia-Empfangsterminal (T) erfasst und mit der Hauptkomponente (C1) verbunden zu werden, um dem Benutzer einen kohärenten audiovisuellen Inhalt wiederzugeben, der von der Haupt- (C1) und Nebenkomponente (C2) gebildet ist,

wobei die Hauptzeitmarken (TSFCS1) zum Fortschritt der Inhaltswiedergabe und die Nebenzeitmarken (TSFCS2) zum Fortschritt der Inhaltswiedergabe zusätzlich zu Darstellungszeitstempeln, PTS genannt, die in den Haupt- und Nebenkomponenten enthalten sind und zum vorbestimmten Referenzzeitpunkt nicht angezeigt werden, eingesetzt werden,

wobei die Hauptkomponente (C1) und die Nebenkomponente (C2) an dem Multimedia-Empfangsterminal (T) wiedergegeben werden, wobei die Chronologie der Nebenzeitmarken (TSFCS2) zum Fortschritt der Inhaltswiedergabe und der Hauptzeitmarken (TSFCS1) zum Fortschritt der Inhaltswiedergabe eingehalten wird, wobei die Chronologie darin besteht, den Durchgang einer Hauptzeitmarke (TSFCS1) zum Fortschritt der Inhaltswiedergabe in der Hauptkomponente (C1) zu erfassen, in der Nebenkomponente (C2) eine Nebenzeitmarke (TSFCS2) zum Fortschritt der Inhaltswiedergabe zu suchen, die einen Nebenwert (V2) hat, der unmittelbar größer als der Hauptwert (V1) der erfassten Hauptzeitmarke zum Fortschritt der Inhaltswiedergabe ist, und die Wiedergabe der Nebenkomponente (C2) aus der Nebenzeitmarke zum Fortschritt der Inhaltswiedergabe, die durch die Suche erhalten wurde, zu starten;

wobei die Nebenkomponente (C2) gegebenenfalls bei der Wiedergabe die in der Hauptkomponente (C1) vorhandene homologe Komponente ersetzt.

**17.** System zur Aussendung von Fernsehsignalen nach Anspruch 16, ferner umfassend Mittel, um in die Nebenkomponente (C2) die Nebenzeitmarken (TSCFS2) zum Fortschritt der Inhaltswiedergabe einzusetzen.

**Claims**

**1.** Method for receiving, on a multimedia reception terminal (T), broadcast television signals, in which

- at least one main component (C1) of the television signals broadcast via a first source is received (E6) on the multimedia reception terminal (T),

**characterized in that**:
- main content reproduction progress time markers (TSFCS1), referenced to a predetermined reference instant (TSFCS10), are first inserted into the main component (C1),
- at least one secondary component (C2), which must be associated with the main component (C1) to reproduce to the user a coherent audiovisual content formed by the main (C1) and secondary (C2) components, is acquired (E5) on the multimedia reception terminal (T) via a second, secondary component transmission source (SC),
- secondary content reproduction progress time markers (TSFCS2) referenced to said predetermined reference instant (TSFCS10) being inserted into the secondary component (C2) before reproduction,
- the received main component (C1) and the acquired secondary component (C2) are reproduced (E6) on the multimedia reception terminal (T), observing the chronology of the secondary content reproduction progress time markers (TSFCS2) and of the main content reproduction progress time markers (TSFCS1), to reproduce to the user a coherent audiovisual content formed by the main (C1) and secondary (C2) components, the secondary component (C2) if necessary replacing the counterpart component present in the main component (C1) during reproduction;

and **in that**:
- the main content reproduction progress time markers (TSFCS1) each have a main value (V1) of the time elapsed since a main marker of the start-of-content of the main component situated at said reference predetermined instant (TSFCS10), said main start-of-content marker being set to zero at the start of each content;
- the secondary content reproduction progress time markers (TSFCS2) each have a secondary value (V2) of the time elapsed since said predetermined reference instant (TSFCS10),
- the main content reproduction progress time markers (TSFCS1) and the secondary content reproduction progress time markers (TSFCS2) are inserted in addition to presentation time stamps, called PTS, contained in the main and secondary components and not referenced to the predetermined reference instant,
- the passing of a main content reproduction progress time marker (TSFCS1) is detected in the received main component (C1), a secondary content reproduction progress time marker (TSFCS2) that has a secondary value (V2) immediately greater than the main value (V1) of the detected main content reproduction progress time marker (TSFCS1) is sought in the acquired secondary component (C2), and the reproduction of the acquired secondary component (C2) is started from the secondary content reproduction progress time marker (TSFCS2) obtained by said search, the secondary content reproduction progress time markers (TSFCS2) being spaced apart in any manner relative to the main content reproduction progress time markers (TSFCS1).

**2.** Reception method according to Claim 1, **characterized in that** said predetermined reference instant (TSFCS10) is a predetermined instant of the start of reproduction of the content of the main component (C1).

**3.** Reception method according to either one of the preceding claims, **characterized in that** the main component (C1) comprises, in addition to said main content reproduction progress time markers (TSFCS1) referenced to said predetermined reference instant (TSFCS10), second main time markers (PTS1) corresponding to said presentation stamps PTS contained in the main component, not referenced to said predetermined reference instant (TSFCS10) and associated respectively with said main content reproduction progress time markers (TSFCS1) referenced to said predetermined reference instant (TSFCS10),

the secondary content reproduction progress time markers (TSFCS2) are modified in the secondary component (C2) to give them the same time reference as the second main time markers (PTS1) of the main component (C1), by adding to the secondary content reproduction progress time markers (TSFCS2) the time offset that exists between the main content playback progress time markers (TSFCS1) referenced to said predetermined reference instant (TSFCS10) and the second main time markers (PTS1), not referenced to said predetermined reference instant (TSFCS10) and associated respectively with said main content reproduction progress time markers (TSFCS1), and said reproduction (E6) of the received main component (C1) and of the acquired secondary component (C2) on the multimedia reception terminal (T) is performed on the basis of the chronology of the modified secondary content reproduction progress time markers (TSFCS2) of the secondary component (C2) and of the second main time markers (PTS1) of the received main component (C1), not referenced to said predetermined reference instant (TSFCS10).

4. Reception method according to any one of Claims 1 to 3, **characterized in that** the secondary content reproduction progress time markers (TSFCS2) are originally in the secondary component (C2) acquired from the second source (SC) on the multimedia reception terminal (T).

5. Reception method according to any one of Claims 1 to 3, **characterized in that** the secondary content reproduction progress time markers (TSFCS2) are inserted into the secondary component (C2) on the multimedia reception terminal (T), after acquisition on the multimedia reception terminal (T) from the second source (SC).

6. Reception method according to any one of the preceding claims, **characterized in that** the step of acquisition of the secondary component (C2) comprises the storage, in at least one buffer memory of the multimedia reception terminal (T), of the secondary component (C2) received from the second source (SC), and the step of reproduction on the multimedia reception terminal (T) of the received main component (C1) and of the acquired secondary component (C2) comprises the extraction from the buffer memory of the stored secondary component (C2).

7. Reception method according to Claim 6, **characterized in that** the secondary component (C2) is acquired by interrogation (E4) of an address (ADa, ADb) of the secondary component source (SC), which is located in the description data present with the main component (C1) in the received television signals, then downloading (E5) from the secondary component source (SC) to the multimedia reception terminal (T).

8. Reception method according to Claim 6, **characterized in that** the secondary component (C2) is acquired by interrogation (E4) of an address (ADa, ADb) of the secondary component source (SC), which is located in the description data present in the metadata broadcast independently and received previously by the terminal (T) or consulted previously by the terminal (T) at a known address, then downloading (E5) from the secondary component source (SC) to the multimedia reception terminal (T).

9. Reception method according to Claim 7 or 8, **characterized in that** the description data comprise, for each identifier of a secondary component (C2), the type (TC2a, TC2b) of the secondary component (C2) out of at least audio, subtitle or video, the language (LC2a, LC2b) of the secondary component (C2) and the respective address (ADa, ADb) from where to obtain the secondary component (C2) on the second source (SC).

10. Reception method according to Claim 6, **characterized in that** the secondary component (C2) is acquired using a manual search engine (E11) on the second source (SC), then downloading (E14) from the second source (SC) to the multimedia reception terminal (T).

11. Reception method according to Claim 6, **characterized in that** the secondary component (C2) is acquired by sending to the multimedia reception terminal (T) on the second source (SC) in multiple broadcast mode by the secondary component source (SC), and storing in the buffer memory.

12. Reception method according to Claim 6, **characterized in that** the secondary component (C2) is acquired by downloading into the buffer memory and reading the latter in transit.

13. Reception method according to any one of the preceding claims, **characterized in that** the main content reproduction progress time markers (TSFCS1) comprise at least one main desired content interruption marker (TSFCS13) and one main desired content restart marker (TSFCS14) following the main desired content interruption marker (TSFCS13), between which there is an undesirable content in the main component (C1) and which are synchronized in the secondary component (C2) respectively with a first secondary desired content marker (TSFCS23) and a second secondary desired content marker (TSFCS24), which follows the secondary desired content marker (TSFCS23), the secondary component (C2) situated between the first secondary desired content marker (TSFCS23) and the second secondary desired content marker (TSFCS24) corresponding to a desirable content other than the undesirable content of the main component (C1).

14. Computer program, comprising instructions that implement steps, at least steps of reception, acquisition and reproduction, of the reception method according to any one of the preceding claims, when it is implemented on a broadcast television signal reception terminal or module.

15. Receiver of broadcast television signals, the receiver comprising means for receiving, on a multimedia reception terminal (T), at least one main component (C1) of television signals broadcast via a first source and means for reproducing an audiovisual content to the user from the received main component (C1),
**characterized in that** the reception module further comprises:

- means for acquisition, by a second source (SC), of a secondary component (C2), which must be associated with the main component (C1) to reproduce to the user a coherent audiovisual content formed by the main (C1) and secondary (C2) components,
- automatic control means for the reproduction means so that the received main component (C1) and the acquired secondary component (C2) are reproduced by the latter, the acquired secondary component (C2) if necessary replacing the counterpart component present in the main component (C1), and so that, in this reproduction, the chronology of secondary content reproduction progress time markers (TSFCS2) referenced to a predetermined reference instant (TSFCS10) and each having a secondary value (V2) of the time elapsed since said reference instant (TSFCS10), and main content reproduction progress time markers (TSFCS1) referenced to said predetermined reference instant (TSFCS10) and each having a main value (V1) of the time elapsed since a main start-of-content marker of the main component situated at said reference instant (TSFCS10) are observed, said main start-of-content marker being set to zero at the start of each content, said main content reproduction progress time markers (TSFCS1) and the secondary content reproduction progress time markers (TSFCS2) being inserted in addition to presentation time stamps called PTS contained in the main and secondary components and not referenced to the predetermined reference instant (TSFCS10);
- means for detecting the passage of a main content reproduction progress time marker (TSFCS1) in the received main component (C1), searching in the acquired secondary component (C2) for a secondary content reproduction progress time marker (TSFCS2) having a secondary value (V2) immediately greater than the main value (V1) of the detected main content playback progress time marker, and starting the reproduction of the acquired secondary component (C2) from the secondary content reproduction progress time marker obtained by said search, the secondary content reproduction progress time markers (TSFCS2) being spaced apart in any manner relative to the main content reproduction progress time markers (TSFCS1).

16. Television signal broadcasting system, comprising:

- a first source of broadcasting of at least one main component (C1) of the television signals intended for at least one multimedia reception terminal (T), **characterized in that** it further comprises:
- means for inserting into the main component (C1) main content reproduction progress time markers (TSFCS1) referenced to a predetermined reference instant (TSFCS10) and each having a main value (V1) of the time elapsed since a main start-of-content marker of the main component situated at said predetermined reference instant (TSFCS10), said main start-of-content marker being set to zero at the start of each content;
- a second source (SC) of transmission of at least one secondary component (C2), into which are inserted, before reproduction, secondary content reproduction progress time markers (TSFCS2) referenced to said predetermined reference instant (TSFCS10) and each having a secondary value (V2) of the time elapsed since said predetermined reference instant, these secondary content reproduction progress time markers (TSFCS2) being spaced apart in any manner relative to the main content reproduction progress time markers (TSFCS1), said secondary component being intended to be acquired on a multimedia reception terminal (T) and to be associated with the main component (C1) to reproduce to the user a coherent audiovisual content formed by the main (C1) and secondary (C2) components,
the main content reproduction progress time markers (TSFCS1) and the secondary content reproduction progress time markers (TSFCS2) being inserted in addition to presentation time stamps called PTS contained in the main and secondary components and not referenced to the predetermined reference instant,
the main component (C1) and the secondary component C2) being reproduced on the multimedia reception terminal (T) by observing the chronology of the secondary content reproduction progress time markers (TSFCS2) and of the main content reproduction progress time markers (TSFCS1), said chronology consisting in detecting the passage of a main content reproduction progress time marker (TSFCS1) in the main component (C1), searching in the secondary component (C2) for a secondary content reproduction progress time marker (TSFCS2) having a secondary value (V2) immediately greater than the main value (V1) of the detected main content reproduction progress time marker, and starting the reproduction of the secondary component (C2) from the secondary content reproduction progress time marker obtained by said search;

the secondary component (C2) if necessary replacing, in the reproduction, the counterpart component present in the main component (C1).

17. Television signal broadcasting system according to Claim 16, further comprising means for inserting into the secondary component (C2) said secondary content reproduction progress time markers (TSFCS2).

TSFCS10   TSFCS1   V1  PTS S1        S12        TSFCS1

| 0 | | | | 80 | | 120 | | 160 | | 200 | | | | | ←── C1

19920           20000   20040   20080   20120

| 0 | | | 60 | | 110 | | 145 | | 170 | | 220 | | | | ←── C2

TSFCS20              TSFCS2    V2 S2      TSFCS2

## FIG.1

Diffuseur principal
(câble, satellite, hertzien)

Terminal T

Diffusion des données
de description des contenus diffusés

E1 — Sélection
d'un contenu

E2 — Sélection du canal
principal du contenu

E3

| IDC2a | TC2a | LC2a | ADa |
| IDC2b | TC2b | LC2b | ADb |

}D1(F1)

Diffusion des
contenus audiovisuels(C1)

Sélection d'une composante
en téléchargement sur Internet        E4

Requête HTTP :    URL

Réception de la composante téléchargée sur INTERNET

R

Internet

SC

E5 (C2)

Attente de la diffusion du contenu
audiovisuel, synchronisation
et décodage de la composante
téléchargée sur Internet        E6

## FIG.2

Commercial

TSFCS=6                    TSFCS11  PTS1  S11                    TSFCS=11

TSFCS10        PTS1        TSFCS1

| | | | | | 7 | 8 | 9 | 10 | | | ←── C1        S1

C2

TSFCS20        PTS2        TSFCS21  PTS2  S21        TSFCS2  S2

TSFCS=6        TSFCS=7

## FIG.4

Terminal T

Moteur de recherche
ou portail TV

E11

Recherche sur Internet de
composantes d'un contenu
audiovisuel

Internet

Serveur secondaire S

E12

Sélection d'une composante
en téléchargement sur Internet

R

E13

R

Requête HTTP : URL

Téléchargement de la composante

Internet

E14(C2)

Diffuseur principal
(cable, satellite, hertzien)

E15

Sélection du canal
principal du contenu

Diffusion des
contenus audiovisuels (C1)

Attente de la diffusion du contenu
audiovisuel, synchronisation
et décodage de la composante
téléchargée sur Internet

E16

## FIG.3

TSFCS=6

TSFCS10

PTS1 S13

TSFCS=7

TSFCS14 S14

13    14    15    16

TSFCS13

S11    S11

C1

TSFCS20

S23

C2

TSFCS23   PTS2   TSFCS24   S24   PTS2

TSFCS=6   TSFCS=7

## FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   US 6324694 B

**Littérature non-brevet citée dans la description**

•   ISO/IEC 13818-1: Information Technology - Generic Coding of Moving Pictures and Associated Audio Information: Systems, Receeommendation ITU-T H220.0 (2000E). *International Standard ISO/IEX,* 01 Décembre 2000, vol. 13818-1, I-XVII